Europäisches Patentamt

European Patent Office

Office européen des brevets

(11) Publication number : **0 643 098 A1**

(12) # EUROPEAN PATENT APPLICATION

(21) Application number : **94306150.7**

(22) Date of filing : **19.08.94**

(51) Int. Cl.⁶ : **C08L 9/00,** C08L 9/06, C08L 21/00, C08K 3/36, C08K 5/37, C08K 5/54

(30) Priority : **11.09.93 GB 9318850**

(43) Date of publication of application : **15.03.95 Bulletin 95/11**

(84) Designated Contracting States : **DE FR GB**

(71) Applicant : **Sumitomo Rubber Industries Ltd. 6-9, 3-chome, Wakinohama-cho, Chuo-ku Kobe-shi, Hyogo 651 (JP)**

(72) Inventor : **Powell, Brian David William 13 Rose Way Nuneaton, Warwickshire, CV11 4TL (GB)**

(74) Representative : **Moore, John Hamilton J. H. Moore & Co., 8 Gaiafields Road Lichfield, Staffs. WS13 7LT (GB)**

(54) **Rubber compositions.**

(57)    The invention relates to rubber compositions, particularly suitable for tyre treads having an improved balance of properties such as rolling resistance, grip and wear.

It provides a vulcanisable rubber composition comprising a rubbery polymer, vulcanisation agent and filler, the filler comprising silica which has been pre-coupled with a coupling agent, the coupling agent being at least bi-functional whereby it can react with the silica and with the polymer.

The invention also provides a tyre having a tread formed by the vulcanisation of such a rubber composition.

EP 0 643 098 A1

This invention relates to rubber compositions and particularly to vulcanisable rubber compositions, e.g. for the manufacture of tyre treads, and to tyre treads made from such compositions.

It is well known that it is desirable to reduce the rolling resistance of a motor vehicle tyre in order to achieve reduced fuel consumption. However, it is also well known that reductions in rolling resistance are normally achieved at a cost, namely reduced tyre grip and/or reduced wear resistance.

Previous proposals to reduce the rolling resistance of a tyre have included reducing the amount of carbon black in the tread composition, using a carbon black of relatively low surface area and adding a polymer with a relatively low glass transition temperature. None of these proposals has been entirely successful since, for example, a typical consequence is an undesirable reduction in tyre wet grip.

Hence, there remains a need to improve tyre tread compositions to achieve a better overall balance of properties, in particular to improve, i.e. reduce, rolling resistance without impairing other properties such as the above-mentioned grip and wear.

Accordingly, in one aspect the invention provides a vulcanisable rubber composition comprising a rubbery polymer or copolymer, vulcanisation agent and filler, the filler comprising silica which has been pre-coupled with a coupling agent, the coupling agent being at least bi-functional whereby it can react with the silica and with the polymer. Normally, the reaction with the polymer will be during the vulcanisation stage when the composition is heated to vulcanisation temperature.

The coupling agent is preferably a silane coupling agent e.g. bis(3-triethoxy-silyl propyl)-tetrasulphide or mercapto propyl triethoxy silane, particularly where the vulcanisation agent is sulphur. In these examples, the alkoxy moieties react and couple with the silica in the pre-coupling reaction and the suphidic moieties react with the rubbery polymer in the vulcanisation reaction. Alternatively, the coupling agent may be, for example, a vinyl silane, e.g. vinyl triethoxy silane, or a thiocyanatotriethoxy silane, e.g. thiocyanato-propyl-triethoxy silane, or a zirconate coupling agent, e.g. zirconium dineoalkanato di(3-mercapto) propionato-O.

The silica preferably has a nitrogen surface area of from 60 to 300 $m^2$/g, especially 80 to 250$m^2$/g, and is preferably a precipitated silica. It is treated with the coupling agent prior to its incorporation in the rubber composition by, for example, physical mixing at ambient temperature and then subjecting the mixture to elevated temperature to promote the coupling reaction.

The composition may contain silica as the only filler or, if desired, admixtures with other fillers, e.g. carbon black, may be used. Where pre-coupled silica is the only filler, it is preferably used in an amount of from 30 parts to 120 parts per hundred parts by weight of rubbery polymer. Where other fillers are included the pre-coupled silica is preferably used in an amount of at least 15 parts per hundred parts by weight of rubbery polymer and the total filler loading may preferably be up to 120 parts by weight.

The rubber composition may contain conventional additives, e.g. accelerators, activators, extenders and anti-degradents as desired. The vulcanisation agent is preferably sulphur or a sulphur-containing compound but any other suitable vulcanisation agent may be used, e.g. phenolic resin or peroxide. The vulcanisation agent may be added to the composition late in the mixing stage after the initial mechanical mixing together of the other ingredients or, preferably, it may be added in a subsequent mixing stage.

The rubbery polymer may be any polymer suitable for use in a tyre tread or in any other component of a tyre where the property of low rolling resistance is of benefit, for example in the undertread or sidewall. For example, it may be a solution- or emulsion-polymerised styrene-butadiene copolymer, a polybutadiene homopolymer or a vinyl polybutadiene or it may be a blend of polymers.

The coupling agent may be used, for example, in an amount of from 2 to 15 per cent by weight of the silica filler, preferably from 5 to 12 per cent.

In another aspect the invention provides a tyre tread formed form a vulcanised composition, the composition comprising a rubbery polymer or copolymer, vulcanisation agent and filler, the filler comprising silica which had been pre-coupled with a coupling agent, the coupling agent being at least bi-functional whereby it can react with the silica and with the polymer.

The invention also provides a tyre having a tread of the immediately preceding paragraph.

We have surprisingly found that the use of pre-coupled silica as filler in tyre tread compositions has a number of benefits. Firstly, it enables the thermomechanical mixing of the ingredients to be carried out at lower temperatures than are conventionally required. For example, mixing at about 160°C is typically carried out for known tread compositions whereas compositions of the invention can be mixed satisfactorily at, for example, a temperature of about 125°C. Moreover, vulcanised tyre tread compositions of the invention have the desired reduced rolling resistance compared with conventional tyre treads while retaining an acceptable balance of grip and wear resistance.

In order to demonstrate rolling resistance and grip properties of tyre tread compositions it is conventional practice to subject the compositions under laboratory conditions to viscoelastic testing and to predict the properties from the hysteresis characteristics displayed in the tests. The tests subject the tread composition to sinusoidal dynamic deformation under shear, tension or compression at a controlled temperature. It is well known for the wet grip and rolling resistance to be interpreted from the loss modulus and loss compliance values at temperatures of typically 0°C and 50°C respectively. Thus for high wet grip a high loss modulus and/or high loss compliance at 50°C is desirable, whilst for low rolling resistance a low loss modulus and/or low loss compliance at 50°C is desirable.

Thus the invention will now be further described by way of example only with reference to the following specific compounding and testing procedures and the Examples as detailed below.

Tyre tread compositions as detailed below were prepared using a 2-stage mixing procedure. In the first stage the compositions were each mixed in a 2 litre laboratory internal mixer up to a discharge temperature of 125°C for a mixing time of 5.5 minutes. In the second stage the mixing was completed by the addition of the sulphur and accelerator on a laboratory two roll mill at about 50°C for about 5 minutes.

The mixed compositions were then cured in moulds for 20 minutes at 165°C.

Viscoelastic testing of the cured samples was then conducted as follows:-

Pre-tension : 10%
Dynamic Strain : 0.5% (Double Strain Amplitude)
Frequency : 10Hz
Parameters : Complex Modulus $E^*$
Dynamic Modulus $E_1$
Loss Modulus $E_2$
Loss Tangent (TD) $E_2/E_1$
Loss Compliance (LC) $E_2/(E^*)^2$

Abrasion testing was conducted according to DIN535616.

The compositions used and test results obtained were as follows:

Example 1

|  | Parts by Weight | |
|---|---|---|
|  | Control 1 | 1 |
| SBR (A) | 50.0 | 50.0 |
| SBR (B) | 68.8 | 68.8 |
| N220 Carbon Black | 68.0 | - |
| Coupled Silica | - | 75.7 |
| Aromatic Oil | 12.4 | 12.4 |
| Zinc Oxide | 2.0 | 2.0 |
| Stearic Acid | 1.5 | 1.5 |
| 6PPD | 1.0 | 1.0 |
| Hydrocarbon Wax | 1.5 | 1.5 |
| Sulphur | 1.8 | 1.8 |
| CBS (accelerator) | 1.3 | 1.3 |

FOOTNOTES

SBR (A)    =    Solution SBR 15% styrene.

SBR (B)    =    Solution SBR 30% styrene, extended with 37.5 parts aromatic oil.

Coupled Silica    =    Precipitated silica, surface area $175m^2/g$, pre-reacted with 11.3% bis(3-triethoxy-silylpropyl)-tetrasulphide. Marketed by Degussa AG (Frankfurt, Germany) as Coupsil 8113.

6PPD    =    N-(1,3-dimethylbutyl)-N'-phenyl-p-phenylene diamine.

CBS    =    N-cyclohexyl-2-benzthiazole sulphenamide.

4

| Viscoelastic Testing | | | Control 1 | 1 |
|---|---|---|---|---|
| 0°C | E* | MPa | 39.0 | 27.6 |
| | $E_2$ | MPa | 10.2 | 7.1 |
| | TD | | 0.27 | 0.27 |
| | LC | $(GPa)^{-1}$ | 6.7 | 9.3 |
| 50°C | E* | MPa | 13.2 | 11.4 |
| | $E_2$ | MPa | 2.2 | 1.3 |
| | TD | | 0.17 | 0.12 |
| | LC | $(GPa)^{-1}$ | 12.7 | 10.1 |
| Abrasion Testing | | | | |
| Volume Loss | | mm³ | 112 | 105 |

It will be seen from the above results that the replacement of carbon black with an equivalent loading of pre-coupled silica (68.0 parts silica + 7.7 parts coupling agent) provided at 50°C a 40% reduction in loss modulus ($E_2$) and a 20% reduction in loss compliance (LC). Rolling resistance of tyre treads made from the composition of Example 1 will therefore be reduced.

At 0°C, a favourable increase in loss compliance of Example 1 balances a reduction in loss modulus. Wet grip will therefore be retained.

Wear resistance of the composition of Example 1 is improved.

Examples 2 and 3

| | Parts by Weight | | | |
|---|---|---|---|---|
| | Control 2 | 2 | Control 3 | 3 |
| SBR 1712 | 100.0 | 100.0 | - | - |
| SBR (C) | - | - | 100.0 | 100.0 |
| N375 Carbon Black | 50.0 | - | 50.0 | - |
| Coupled Silica | - | 55.5 | - | 55.5 |
| Zinc Oxide | 3.0 | 3.0 | 3.0 | 3.0 |
| Stearic Acid | 1.0 | 1.0 | 1.0 | 1.0 |
| Sulphur | 1.8 | 1.8 | 1.8 | 1.8 |
| TBBS (accelerator) | 1.0 | 1.0 | 1.0 | 1.0 |
| DPG (accelerator) | - | 1.0 | - | 1.0 |

FOOTNOTE

| | | |
|---|---|---|
| SBR 1712 | = | Emulsion SBR, 23.5% styrene, extended with 37.5 parts aromatic oil. |
| SBR (C) | = | solution SBR, 25% styrene, extended with 37.5 parts aromatic oil. |
| TBBS | = | N-butyl benzthiazole sulphenamide. |
| DPG | = | Diphenylguanidine. |
| Coupled Silica | = | Precipitated silica, surface area 175m$^2$/g, pre-reacted with 11.3% bis(3-triethoxy-silylpropyl)-tetrasulphide. Marketed by Degussa AG (Frankfurt, Germany) as Coupsil 8113. |

| Viscoelastic Testing | | | | | | |
|---|---|---|---|---|---|---|
| | | | | Parts by weight | | |
| | | | Control 2 | 2 | Control 3 | 3 |
| 0°C | E* | MPa | 14.2 | 15.9 | 24.5 | 20.2 |
| | $E_2$ | MPa | 4.3 | 4.6 | 9.0 | 6.8 |
| | TD | | 0.32 | 0.31 | 0.40 | 0.37 |
| | LC | $(GPa)^{-1}$ | 21.2 | 18.4 | 15.0 | 17.3 |
| 50°C | E* | MPa | 7.1 | 8.8 | 10.5 | 9.5 |
| | $E_2$ | MPa | 1.4 | 1.1 | 2.8 | 1.2 |
| | TD | | 0.21 | 0.13 | 0.28 | 0.13 |
| | LC | $(GPa)^{-1}$ | 28.2 | 14.2 | 25.4 | 13.1 |
| Abrasion Testing | | | | | | |
| Volume Loss | | $mm^3$ | 78 | 89 | 109 | 95 |

It will be seen from the above results that the replacement of carbon black with an equivalent loading of pre-coupled silica (50.0 parts silica + 5.5 parts coupling agent), provides a considerable reduction in loss modulus ($E_2$) and loss compliance (LC) at 50°C for the compositions of Examples 2 and 3. Rolling resistance of tyre treads of Examples 2 and 3 will therefore be reduced.

At 0°C an acceptable balance of loss modulus and loss compliance is maintained for the Examples of the invention. In emulsion SBR (Example 2), $E_2$ rises to compensate for a reduction in LC, whilst in solution SBR (Example 3), LC has risen to compensate for a reduction in $E_2$.

Wear resistance in solution SBR (Example 3) has increased, whilst in emulsion SBR (Example 2) a small but acceptable reduction has resulted.

**Claims**

1. A vulcanisable rubber composition comprising a rubbery polymer, vulcanisation agent and filler, the filler comprising silica which has been pre-coupled with a coupling agent, the coupling agent being at least bi-functional whereby it can react with the silica and with the polymer.

2. A vulcanisable rubber composition according to Claim 1, wherein the coupling agent is a silane coupling agent.

3. A vulcanisable rubber composition according to Claim 2, wherein the coupling agent is bis(3-triethoxy-silyl propyl) tetrasulphide or mercapto propyl triethoxy silane.

4. A vulcanisable rubber composition according to Claim 2, wherein the coupling agent is a vinyl silane or a thiocyanato-triethoxy silane.

5. A vulcanisable rubber composition according to Claim 4, wherein the coupling agent is vinyl triethoxy silane or thiocyanato-propyl-triethoxy silane.

6. A vulcanisable rubber composition according to Claim 1, wherein the coupling agent is a zirconate.

7. A vulcanisable rubber composition according to Claim 6, wherein the coupling agent is zirconium dineoalkanato di(3-mercapto) propionato-0.

8. A vulcanisable rubber composition according to any preceding claim, wherein the silica is a precipitated silica.

9. A vulcanisable rubber composition according to any preceding claim, wherein the silica has a nitrogen surface area of from 60 to 300 $m^2/g$, preferably from 80 to 250$m^2/g$.

10. A vulcanisable rubber composition according to any preceding claim, wherein the silica is the only filler and is present in an amount of from 30 to 120 parts per 100 parts by weight of the rubbery polymer.

11. A vulcanisable rubber composition according to any one of Claims 1 to 9, wherein other filler material is included in addition to the silica, and the silica filler is present in an amount of at least 15 parts per hundred parts by weight of the rubbery polymer and the total filler content is up to 120 parts by weight.

12. A vulcanisable rubber composition according to any preceding claim, wherein the vulcanisation agent is sulphur, a sulphur-containing compound, phenolic resin or peroxide.

13. A vulcanisable rubber composition according to any preceding claim, wherein the rubbery polymer comprises a solution- or an emulsion-polymerised styrene-butadiene copolymer, a polybutadiene homopolymer or a vinyl polybutadiene.

14. A vulcanisable rubber composition according to any preceding claim, wherein the coupling agent is used in an amount of from 2 to 15 per cent by weight of the silica.

15. A vulcanisable rubber composition according to Claim 14, wherein the coupling agent is used in an amount of from 5 to 12 per cent by weight of the silica.

16. A tyre having a tread formed by the vulcanisation of a composition of any one of the preceding claims.

European Patent
Office

# EUROPEAN SEARCH REPORT

Application Number

| DOCUMENTS CONSIDERED TO BE RELEVANT | | | EP 94306150.7 |
|---|---|---|---|
| **Category** | **Citation of document with indication, where appropriate, of relevant passages** | **Relevant to claim** | **CLASSIFICATION OF THE APPLICATION (Int. Cl. 6)** |
| X | AT - B - 392 795 (DEGUSSA AKTIENGESELLSCHAFT) * Claims; page 4, line 22 - - page 5, line 10; page 14, lines 27-38 * -- | 1-3, 8-16 | C 08 L 9/00<br>C 08 L 9/06<br>C 08 L 21/00<br>C 08 K 3/36<br>C 08 K 5/37<br>C 08 K 5/54 |
| X | US - A - 4 820 751 (TAKESHITA et al.) * Claims ; column 3, lines 16-56; table 2 * -- | 1-3, 11-13, 16 | |
| X | EP - A - 0 028 911 (MITSUBISHI BELTING LTD.) * Claims; page 5, lines 26-37 * -- | 1-5, 11, 13-15 | |
| X | US - A - 4 430 466 (COOPER) * Claims; column 3, lines 1-60 * ---- | 1-3, 8-15 | **TECHNICAL FIELDS SEARCHED (Int. Cl. 6)**<br><br>C 08 L 9/00<br>C 08 L 21/00<br>C 08 J<br>C 08 K |

The present search report has been drawn up for all claims

| Place of search | Date of completion of the search | Examiner |
|---|---|---|
| VIENNA | 10-11-1994 | WEIGERSTORFER |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                                                      
& : member of the same patent family, corresponding
document

EPO FORM 1503 03.82 (P0401)